Europäisches Patentamt

European Patent Office

Office européen des brevets

(11) Publication number: **0 487 132 A1**

## EUROPEAN PATENT APPLICATION

(21) Application number: **91202915.4**

(22) Date of filing: **09.11.91**

(51) Int. Cl.⁵: **B60R 9/045**

(30) Priority: **20.11.90 IT 2214490 U**

(43) Date of publication of application:
**27.05.92 Bulletin 92/22**

(84) Designated Contracting States:
**AT BE CH DE ES FR GB IT LI LU NL SE**

(71) Applicant: **MOMO S.p.A.**
**Via Ciro Menotti, 11**
**I-20129 Milan(IT)**

(72) Inventor: **Cattaneo, Marco**
**Via Frank, 32**
**I-27100 Pavia(IT)**

(74) Representative: **Mittler, Enrico et al**
**c/o Marchi & Mittler s.r.l. Viale Lombardia, 20**
**I-20131 Milano(IT)**

(54) **Fixing for a luggage carrier or ski carrier for motor vehicles, which is capable of being fixed to rails of different sections.**

(57) The fixing comprises a first jaw (1) having a cavity (4) formed by a horizontal portion (2) and an inclined portion (3), and a second jaw (7) with an essentially vertical wall. One (7) of the jaws (1, 7) is translatable with respect to the other (1) to provide for clamping of the wall (10) and the horizontal (2) and inclined (3) wall portions on a rail (30, 31, 32) of any section and dimensions.

Fig.1

EP 0 487 132 A1

The present invention concerns a fixing for a luggage carrier or ski carrier for motor vehicles, which is capable of being fixed to rails of different sections.

It is known that motorcars with a large engine capacity, such as for example station wagons, are provided on their roof with rails which are intended for fixing luggage carriers or ski carriers of variable lengths.

Those rails are distinguished from each other on the basis of the length and dimension and shape of their sections.

In that respect it is to be noted that, while for example the conventional rail of circular section is used in different sizes both on the PEUGEOT 405 SW and the RENAULT ESPAGE and 21 NEVADA, as regards the VW PASSAT S.W., the old Del used a rail of a section in the form of a right-angled triangle while the new model uses a rail with a section in the shape of an isosceles triangle.

The same rail section as that used in the new model of the VW PASSAT S.W. is then used with slightly more rounded angles for the rail on the OPEL KADETT, with more acute angles on the DB W 124 S.W..

Other motorcars such as the FORD SIERRA and the VW POLO respectively use rails of pseudo-circular and pseudo-ovoidal section.

In the light of those examples, it is easy to realise the difficulty involved in designing a simple, universal fixing which is capable of being fitted to the different shapes and sections of existing rails.

The aim of the present invention is that of providing a fixing for a luggage carrier or ski carrier, which can be used with rails of different shapes and sections.

In accordance with the present invention that aim is achieved by means of a fixing for a luggage carrier or a ski carrier for motor vehicles, characterised by comprising a first jaw having a cavity with an acute angle, the cavity being formed by a horizontal wall portion and an inclined wall portion, a second jaw provided with a wall of essentially vertical flat shape, and screw means co-operating with said jaws for controlling their reciprocal movement for clamping the fixing on to a rail interposed between said cavity in the first jaw and said wall of the second jaw.

In that way the walls of the horizontal and inclined portions of the first jaw together with the vertical wall of the second jaw provide an array of at least three tangency points which are sufficient to guarantee engagement of the fixing with any of the rails which are currently used.

The features of the present invention will be more clearly apparent from a practical embodiment thereof which is illustrated by way of non-limiting example in the accompanying drawings in which:

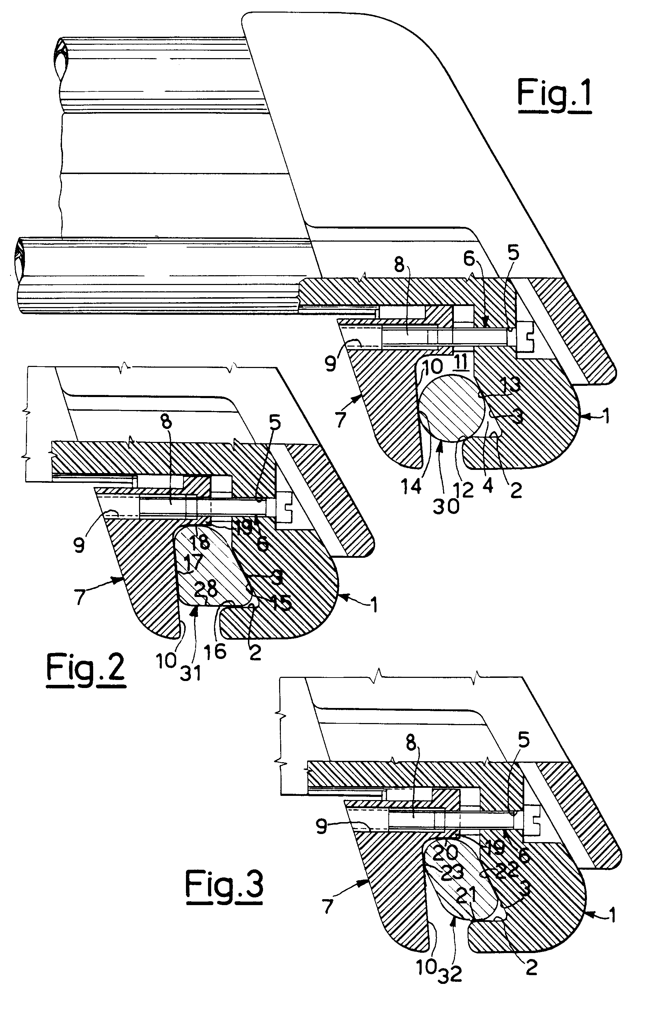

Figures 1, 2 and 3 are views in longitudinal section of a fixing according to the present invention which is respectively fixed to a rail 30, 31, 32 of circular section, of a section in the form of a right-angled trapezium, and a section in the form of an isosceles trapezium, respectively.

Referring to any one of the three Figures, the fixing according to the invention comprises a first fixed jaw 1 which has an acute-angled cavity 4 formed by a horizontal portion 2 and an inclined portion 3. Provided in the upper part of the fixed jaw 1 is a through hole 5 for a screw 6 for adjusting the distance between the fixed jaw 1 and a second jaw 7 which is capable of translatory movement with respect thereto. The second jaw 7 has an essentially vertical wall 10. Provided in the upper part of the second jaw 7 is an internally screwthreaded hole 9 which is aligned with the hole 5 in the first jaw 1 and which is capable of permitting the lower end 8 of the adjusting screw 6 to be screwed in and unscrewed, with consequential adjustment of the distance of the movable jaw 7 with respect to the fixed jaw 1.

The horizontal and inclined portions 2 and 3 respectively of the fixed jaw 1 in conjunction with the vertical wall 10 of the second jaw 7 define a cavity 11 suitable for accommodating a rail of any shape.

The last-mentioned requirement is satisfied by suitably adjusting the distance of the second jaw 7 with respect to the first fixed jaw 1.

As shown in Figure 1, in the situation in which the rail is of circular section, it will have three tangency points 12, 13 and 14 respectively with the walls of the horizontal and inclined portions 2 and 3 of the first jaw 1 and with the vertical wall 10 of the second jaw 7.

As illustrated in Figure 2, in the situation in which the rail is of a section in the shape of a right-angled trapezium, it will bear with part of the inclined side 15 closely against the inclined wall portion 3 of the jaw 1, with a short part of the larger base 28 against the horizontal portion 2 of the jaw 1, with its vertical side 17 against the vertical wall 10 of the jaw 7 and with part of the smaller base 18 against an angular extension 19 of the vertical wall 10.

As shown in Figure 3, in the situation in which the rail is of a section in the shape of an isosceles trapezium, it will bear with parts of the smaller and larger bases 20 and 21 respectively against the angular extension 19 and the horizontal wall portion 2 of the jaw 1, with a part of the inclined side 22 against the wall of the inclined portion 3 of the jaw 1, while it will have a tangency point at a position corresponding to its inclined side 23, with the vertical wall 10 of the jaw 7.

**Claims**

1.  A fixing for a luggage carrier or a ski carrier for motor vehicles, characterised by comprising a first jaw (1) having a cavity (4) with an acute angle, which cavity is formed by a horizontal wall portion (2) and an inclined wall portion (3), a second jaw (7) provided with an essentially vertical flat wall (10), and screw means (6, 9) co-operating with said jaws (1, 7) to control the reciprocal movement thereof for clamping the fixing on a rail (30, 31, 32) which is interposed between said cavity (4) in the first jaw (1) and said wall (10) of the second jaw (7).

2.  A fixing according to claim 1 characterised in that said first jaw (1) is fixed and said second jaw (7) is movable with a translatory movement with respect to the first jaw.

3.  A fixing according to claim 2 characterised in that said screw means (6, 9) comprise a screw (6) which is accommodated in a through hole (5) in the first jaw (1) and which is screwed adjustably in a screwthreaded hole (9) in the second jaw (7).

Fig.1

Fig.2

Fig.3

4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-U-8 811 874 (HEINZ KETTLER GMBH & CO)<br>* figures 1-4 *<br>* page 5, line 1 - line 7 *<br>* page 6, line 12 - page 8, line 7 *<br>--- | 1,2 | B60R9/045 |
| A | EP-A-0 151 907 (INDUSTRI AB THULE)<br>* figures 1,2 *<br>* abstract *<br>* page 2, line 36 - page 5, line 27 *<br><br>----- | 1-3 | |

**TECHNICAL FIELDS SEARCHED (Int. Cl.5)**

B60R

The present search report has been drawn up for all claims

| Place of search | Date of completion of the search | Examiner |
|---|---|---|
| THE HAGUE | 16 MARCH 1992 | D'SYLVA C. |

EPO FORM 1503 03.82 (P0401)